# EUROPÄISCHE PATENTSCHRIFT

(11) **EP 1 035 224 B1**
(45) Veröffentlichungstag und Bekanntmachung des Hinweises auf die Patenterteilung: **03.03.2004**
(21) Anmeldenummer: 00104136.7
(22) Anmeldetag: 29.02.2000
(51) Int. Cl.: C22B 1/20, C22B 7/02, C22B 7/00, B03C 3/017, C21B 7/00

(54) **Verfahren und Anordnung zur Behandlung von chloridhaltigem Staub aus Abgas einer Sinteranlage in Verbindung mit Hochofengichtgasbehandlung**
Process and installation for treating chloride containing dust from sinter band exhaust in connection with blast furnace top gas treatment
Procédé et installation pour le traitement des poussières chargées de chlorures émanant d'une bande d'agglomération en liaison avec le traitement de gaz de haut fourneau

(30) Priorität: 12.03.1999 DE 19911168
(43) Veröffentlichungstag der Anmeldung: 13.09.2000
(73) Patentinhaber: Alstom, 75116 Paris (FR)
(72) Erfinder: Gottschalk, Jürgen, Dr.-Ing., 61231 Bad Nauheim (DE); Wolf, Klaus Dieter, Dipl.-Ing., 35463 Fernwald (DE)
(74) Vertreter: Dreiss, Fuhlendorf, Steimle & Becker

(56) Entgegenhaltungen:
- EP-A- 0 354 613
- DE-A- 2 717 834
- SPIRIDONOVA S I ET AL: "RECOVERY OF BLAST FURNACE AND SINTER PLANT GAS CLEANING SLUDGES" STEEL IN THE USSR,GB,METALS SOCIETY. LONDON, Bd. 18, Nr. 11, 1. November 1988 (1988-11-01), Seiten 492-493, XP000009005
- DATABASE WPI Section Ch, Week 198151 Derwent Publications Ltd., London, GB; Class J01, AN 1981-94613D XP002140534 & SU 814 404 A (DON FERR METAL EFFL), 23. März 1981 (1981-03-23)

## Beschreibung

Die Erfindung betrifft ein Verfahren zur Behandlung von chloridhaltigem Staub aus dem Abgas einer zu einem Hochofen mit Gichtgaswäscher gehörigen Eisenerzsinteranlage mit einer Mischtrommel zur Möllervorbereitung und mit einem Sinterband, welches Abgas nach Verlassen des Sinterbands wenigstens eine Filtereinrichtung durchströmt, in weicher in dem Abgas mitgeführter Staub abgeschieden wird. Ferner betrifft die Erfindung auch eine Anordnung zur Durchführung des Verfahrens.

Eisenerzsinteranlagen, üblicherweise kurz als Sinterbandanlagen bezeichnet, sind im allgemeinen mit Einrichtungen zur Staubabscheidung, zum Beispiel Elektrofilter, ausgerüstet. Dabei werden die mit Alkalichloriden belasteten Stäube vom Sinterband abgesaugt und der jeweils vorgesehenen Filtereinrichtung zugeführt. In sehr vielen Fällen werden heute an solche Anlagen Emissionsanforderungen gestellt, die nur dadurch erfüllt werden können, daß auf die sonst übliche Rezirkulation des abgeschiedenen Staubs zurück in den Sinterprozeß ganz oder teilweise verzichtet wird. Der Staub muß deponiert werden.

Ein bislang ungelöstes Problem besteht darin, daß der Staubanfall einerseits unvermeidlich ist, daß aber andererseits für das staubbeladene Abgas festgelegte Grenzwerte hinsichtlich der Staubemissionen sowie der Emissionen an Chlorwasserstoff gelten, die nicht überschritten werden dürfen. Darüber hinaus besteht der wirtschaftliche Zwang und auch zunehmend die Forderung nach Wiedereinbringung der Stäube in den Prozeß, um so das Deponieren zu vermeiden oder möglichst gering zu halten.

Heute übliche Anforderungen an die Emissionen sind für HCl : ≤ 30 mg/m3 i.N.tr, und für Staub: ≤ 50 mg/m' i.N.tr.

Der wesentliche Grund für die Deponierung des Staubs ist vorrangig die Stoffbilanz hinsichtlich der Chloride, welche mit dem Möller (Feinerze + Kreislaufstoffe + Kalk + Koks) in einer Menge von ca. 0,03 % In den Sinterprozeß eingeführt werden. Austräge für Chloride aus dem Prozeß sind der Sinter selbst sowie die Emissionen an die Atmosphäre über den Kamin. Der Austrag über den Sinter ist auf Grund der hohen Sintertemperaturen relativ gering und weitestgehend konstant (ca. 0,005 % Chlorid im Sinter), so daß zur Einhaltung der obigen Emissionsanforderungen ein dritter Austrag notwendig ist. Das ist der abgeschiedene Staub aus dem Filter, der dann ausgeschleust und deponiert werden muß. Das ist insofern bedenklich, weil dieser Staub dioxinbelastet ist.

Aus der EP 03 54 613 A1 ist ein Verfahren zum Reinigen der chloridbeladenen Abgase einer Sinteranlage bekannt, bei welcher das anfallende Staubvolumen durch ein Elektrofilter geleitet wird und der abgeschiedene Staub in mehreren zugehörigen Bunkern gesammelt wird. Zum Lösen der Chloride, insbesondere der Alkalichloride, die sich nicht im Abgas anreichern sollen, wird einem Teil der aus dem Abgas abgeschiedenen Feststoffe im Bunker Wasser zugegeben, während die in den übrigen Bunkern gesammelten Feststoffe in die Sinteranlage zurückgeführt werden.

Durch die Wasserzugabe entsteht ein Staub-Wasser-Gemisch, welches in einen Absetzbehälter geleitet wird. Von dort wird die überlaufende Salzlösung nach Durchlaufen einer Anlage zur Abtrennung von Schwermetallen einem Sprühtrockner zugeführt und mit heißem Abgas aus der Sinteranlage beaufschlagt, so daß die getrockneten Salze teilweise zu Boden sinken, während die wasserdampfhaltigen Abgase, nur grob entstaubt, den dem Elektrofilter zuströmenden Abgas hinzugemischt werden. Der Unterlauf des Absetzbehälters wird wieder der Sinteranlage zugeführt. Mit dieser Methode gelingt eine nur unzureichende Reduzierung der Chloride aus dem Sinterprozeß. Das im Elektrofilter entstaubte Abgas wird von einem nachgeschalteten Gebläse über einen Abgaskamin an die Umgebungsluft abgegeben.

Es ist ferner bekannt, daß der Staubabscheidegrad sehr stark vom Gehalt an Alkalichloriden, insbesondere Kaliumchlorid, abhängt, weil diese Salze den elektrischen Staubwiderstand gravierend erhöhen, was sich insbesondere beim Einsatz von Elektrofiltern als nachteilig erweist. Diese werden nämlich in ihrer Funktion dadurch stark beeinträchtigt, daß die abzuscheidenden Staubpartikel infolge fehlender Entladungsmöglichkeit nicht an der Abscheideelektrode anhaften, sondern wegen "Rücksprühen" in den Abgasstrom zurückgeschleudert werden.

Um diesen chloridreichen Staub abzuscheiden und nicht über den Kamin abzugeben, was zu einer Überschreitung der zulässigen Emissionswerte führen würde, werden Spezial-Elektrofilter eingesetzt. Solche Spezial-Elektrofilter sind vorzugsweise Filter mit beweglicher Abscheideelektrode oder mit speziellen, kostenintensiven Mikropulshochspannungsaggregaten.

Trotzdem bleibt die Notwendigkeit mindestens eine Teilmenge der abgeschiedenen Stäube wegen der Chloridbilanz aus dem Prozeß auszuschleusen und zu deponieren.
Diese bekannten Maßnahmen zielen allesamt darauf ab, die Chloridfracht in dem Prozeß weitestmöglich abzusenken, so daß zur Rezirkulation ein Staub mit möglichst geringem Chloridgehalt bereitsteht, das heißt, dem Sinterprozeß zugeführt werden kann.

Ausgehend von diesem Stand der Technik ist es Aufgabe der Erfindung, ein Verfahren der eingangs genannten Art anzugeben, weiches auf möglichst einfache Weise zuverlässig gestattet, chloridhaltiges Abgas aus einer Eisenerzsinteranlage so zu reinigen, daß eine vollständige Rezirkulation des Staubes möglich ist, und die Chloridbilanz die Einhaltung der obigen Emissionsgrenzwerte zuläßt.

Diese Aufgabe wird erfindungsgemäß dadurch gelöst, daß der aus der wenigstens einen Filtereinrichtung angefallene Trockenstaub zu einem der Mischtrommel zugeordneten Vorlagesilo gefördert wird, wobei der im Vorlagesilo befindliche Staub einem Lösebehälter zugeführt und darin mit Wasser dispergiert wird. Anschließend wird der so erzeugten Wasser-Staub-Suspension in einer Entwässerungseinrichtung die Flüssigkeit entzogen und diese dem Abwasser des Gichtgaswäschers des Hochofens zugeführt, so daß ein feuchter Feststoff zurückbleibt, weicher dem Sinterband und von dort dem Hochofen zugeführt wird.

Um also den mit Einsatz von Spezialelektrofiltern verbundenen Aufwand zu vermeiden und die Notwendigkeit der Staubausschleusung mit Staubdeponierung zu umgehen, ist erfindungsgemäß vorgesehen, daß der im Filter abgeschiedene Staub in Wasser dispergiert wird, wodurch die Chloride gelöst werden, und daß anschließend die Staubsuspension entwässert wird. Dadurch wird der Staub von Chloriden weitestgehend befreit und der hierbei entstehende Feststoff kann der Möllervorbereitung zugeführt werden. Die Flüssigkeit hingegen wird in die Abwasserbehandlung des Gichtgaswäschers des Hochofens geleitet.

Durch dieses Waschen des Filterstaubs ergeben sich folgende Vorteile. Eine Deponierung von dioxinbeladenen Staub kann entfallen, so daß eine Rückführung des chlorifdfreien Staubs in den Sinterprozeß zu 100 % möglich ist. Darüber hinaus ist auf diese Weise eine Nutzung des Eisen(Fe)-Anteiles im Staub zur Erzeugung von Sinter möglich, der anderenfalls mit dem Staub deponiert werden würde. Ebenso entfällt der Aufwand für die Installation von Spezial-Elektrofiltern, da die Beibehaltung des bereits vorhandenen Elektrofilters möglich ist. Schließlich wird hiermit die Realisierung der erforderlichen Chloridsenke im Sinterprozeß möglich.

In weiterer Ausgestaltung des erfindungsgemäßen Verfahrens erweist es sich als vorteilhaft, daß das Abgas nach Verlassen des Sinterbands einem Elektrofilter oder einem Elektrofilter und einem in Reihe nachgeschalteten Schlauchfilter zugeführt wird. Die hierbei abgeschiedenen Feststoffe werden dann wie vorstehend erläutert zunächst zu dem Vorlagesilo gefördert und von dort zur weiteren Behandlung dem Lösebehälter zugeführt, wo sie in Wasser dispergiert werden.

Eine bevorzugte Weiterbildung der Erfindung ist dadurch gekennzeichnet, daß die in dem Rührbehälter dispergierte Wasser-Staub-Lösung auf einer als Bandfilter ausgebildeten Entwässerungsvorrichtung entwässert wird, indem die Feststoffsuspension auf das Band aufgebracht wird.

In weiterer vorteilhafter Ausgestaltung der Erfindung kann vorgesehen sein, daß die aus dem Vorlagesilo zugeführten und in dem Lösebehälter unter Zugabe von Wasser dispergierten Feststoffe , die auf das Band I der Entwässerungsvorrichtung äufgebracht sind und entwässert sind, unter dosierter Wasserzugabe örtlich nachgewaschen werden, wodurch das Herauslösen der Reste von wasserlöslichen Chloriden unterstützt wird.

Entsprechend einem weiteren Teil der Erfindung ist eine Anordnung zur Durchführung des zuvor beschriebenen Verfahrens vorgesehen, die mit einer zu einem Hochofen mit Gichtgaswäscher gehörigen Eisenerzsinteranlage mit einer Mischtrommel zur Möllervorbereitung und mit einem Sinterband ausgestattet ist sowie mit wenigstens einer nachgeschalteten Filtereinrichtung, durch welche das Abgas zu einem Abgaskamin strömt, und mit einer dem Gichtgaswäscher zugeordneten Abwasseraufbereitungsanlage.

Ausgehend von diesem Stand der Technik ist es Aufgabe der Erfindung, im Hinblick auf die angestrebte Absenkung des Chloridgehaltes im Abgas sowie auf die gewünschte Rezirkulation der im Abgas enthaltenen Feststoffe zwecks Vermeidung erforderlicher Deponierung dieser Feststoffe, eine Anordnung der zuvor beschriebenen Art mit möglichst geringem Aufwand so weiterzubilden, daß der zuverlässige Betrieb mit Einhaltung der Emissionsgrenzwerte gewährleistet ist.

Diese Aufgabe wird erfindungsgemäß dadurch gelöst, daß der Mischtrommel der Eisenerzsinteranlage ein Vorlagesilo zugeordnet ist, welches aus der wenigstens einen Filtereinrichtung für das Abgas stammenden Trockenstaub aufnimmt, daß dem Vorlagesilo ein Lösebehälter zugeordnet ist, in welchem der Trockenstaub unter Zugabe von Wasser eine Suspension bildet, daß eine Entwässerungseinrichtung für die Suspension vorgesehen ist, welche die Suspension in einen nahezu chloridfreien Feststoff und in eine chloridhaltige wässerige Lösung trennt und daß die Anordnung Mittel zur Zuführung des nahezu chloridfreien Feststoffes zur Mischtrommel sowie Mittel zur Zuleitung der chloridhaltigen wässerig Lösung zum Abwasser des Gichtgaswäschers des Hochofens aufweist. Zur Verbesserung der Entwässerung der Suspension kann dieser ein Flockungsmittel zudosiert werden.

Vorteilhafterweise ist in weiterer Ausgestaltung der Erfindung eine Verbindung zwischen der Entwässerungseinrichtung einerseits und der zum Gichtgaswäscher der Hochofenanlage zugeordneten Wasseraufbereitungsanlage vorgesehen, welche das der Entwässerungseinrichtung entstammende Wasser aufnimmt und behandelt.

Eine bevorzugte Ausgestaltung der Erfindung besteht darin, daß als Entwässerungseinrichtung für die dispergierte Feststoff-Wasser-Suspension ein Bandfilter vorgesehen ist, auf welches die Suspension aufgebracht wird.

In weiterer Ausgestaltung kann vorgesehen sein, daß der auf dem Bandfilter entstandene Filterkuchen nachgewaschen wird, indem quer zur Förderrichtung eine Sprühvorrichtung angeordnet ist, aus welcher die Suspension linienartig mit Wasser besprüht wird. Hierdurch wird insbesondere erreicht, daß das Im Filterkuchen noch befindliche Chlorid quasi verdrängt wird, so daß der am Ende der Behandlung vorhandene Feststoff nahezu chloridfrei ist, während das Filtrat chloridbeladen ist.

Diese und weitere vorteilhafte Ausgestaltungen und Verbesserungen der Erfindung sind Gegenstand der Unteransprüche.

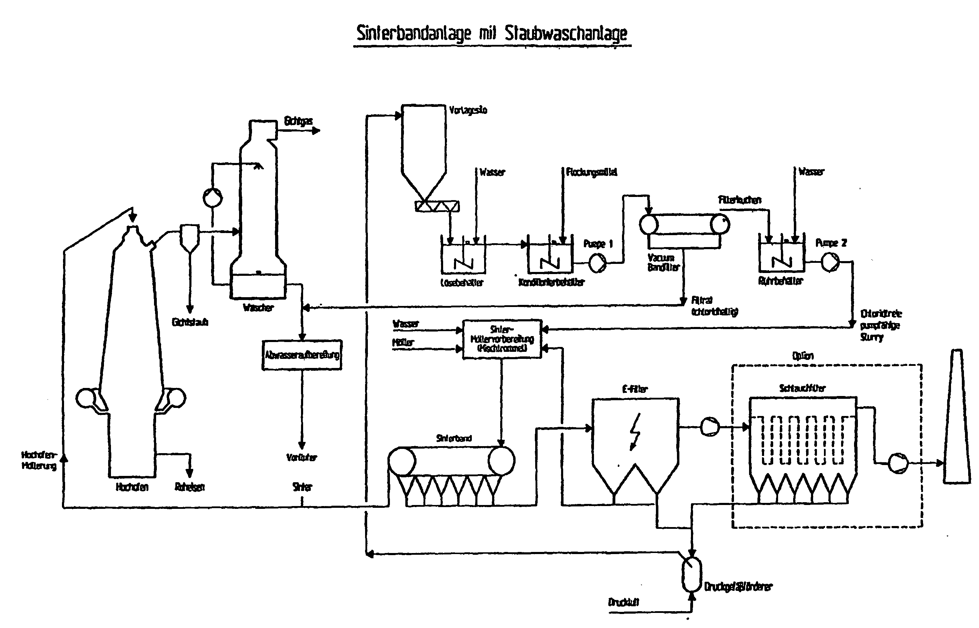

Anhand eines in der beiliegenden Zeichnung dargestellten Ausführungsbeispiels sollen die Erfindung, weitere vorteilhafte Ausgestaltungen und Verbesserungen der Erfindung sowie besondere Vorteile der Erfindung näher erläutert und beschrieben werden.

Es zeigt die einzige Figur
eine schematische Schaltungsanordnung für eine erfindungsgemäße Anordnung, in welcher das erfindungsgemäße Verfahren durchgeführt werden kann.

In der einzigen Figur ist in anschaulicher und selbsterklärender Weise ein Übersichtsschema für eine Hochofenanlage mit einer darin integrierten erfindungsgemäßen Anordnung zur Durchführung des Verfahrens dargestellt. Dementsprechend wird Beginnend bei einer Mischtrommel, in welcher die so bezeichnete Möllervorbereitung stattfindet, gelangt das Sintervormaterial (Möller) zu einem Sinterband, das ist ein offener bandartiger Ofen, auf welchem bei hoher Temperatur (1100 - max.1400°C) der Sinterprozeß erfolgt.

Unterhalb des Sinterbandes angeordnete Gaszüge (Saugkästen) sorgen dafür, daß Umgebungsluft durch das Sinterbett hindurchströmt und hierbei Partikel, insbesondere mit Alkalichloriden beladene Feststoffe mitreißt. Dieser so erzeugte Gasstrom wird einer Filtereinrichtung zugeführt, die gemäß der Erfindung von einem Elektrofilter und ggf. einem nachgeschalteten Schlauchfilter gebildet ist., bevor das Abgas über einen Abgaskamin wieder an die Umgebung abgegeben wird.

Das beim Durchströmen der Filtereinrichtung erhaltene Filterstaub ist chloridhaltiger Trockenstaub, welcher über eine Förderleitung zu einem der Mischtrommel zugeordneten Vorlagesilo gefördert wird..

Aus diesem Vorlagesilo wird der darin gesammelte Trockenstaub einem Lösebehälter zugeführt. Gleichzeitig wird dem Lösebehälter auch Wasser zugegeben und auf diese Weise eine Suspension hergestellt, die in einen Konditionierbehälter geleitet wird. Der im Konditionierbehälter befindlichen Suspension wird ein Flockungsmittel zugegeben, welches die nachfolgende Entwässerung der Suspension unterstützt.

Über eine Pumpe wird die Suspension zu einem hier als Bandvakuumfilter ausgebildeten Entwässerungseinrichtung zugeführt. Der hierbei entstehende Filterkuchen wird einem Rührbehälter zugeführt und von dort zur Mischtrommel, während das chloridhaltige Filtrat in das Abwasseraufbereitungssystem des Gichtgaswäschers der Hochofenanlage geleitet wird.

Im Hinblick auf die jeweils bei der Gichtgaswäsche einerseits und der Staubwäsche andererseits anfallenden Abwassermengen ist hervorzuheben, das aus der Staubwäsche resultierende Filtrat nur wenige Kubikmeter also nur ca. 1% der Gesamtabwassermenge beträgt, so daß mit der erfindungsgemäß vorgesehenen Art der Abwasserbehandlung in der Gichtgaswäsche keine zusätzliche Reinigungseinrichtung für das Filtrat benötigt wird.

## Patentansprüche

1. Verfahren zur Behandlung von chloridhaltigem Abgas einer zu einem Hochofen mit Gichtgaswäscher gehörigen Eisenerzsinteranlage mit einer Mischtrommel zur Möllervorbereitung und mit einem Sinterband, welches Abgas nach Verlassen des Sinterbands wenigstens eine Filtereinrichtung durchströmt, in weicher in dem Abgas mitgeführter Staub abgeschieden wird,
**dadurch gekennzeichnet, daß**
das aus der wenigstens einen Filtereinrichtung angefallene Trockenstaub zu einem der Mischtrommel zugeordneten Vorlagesilo gefördert wird, daß
der im Vorlagesilo befindliche Staub einem Lösebehälter zugeführt und darin mit Wasser dispergiert wird, daß
der so erzeugten Wasser-Staub-Suspension in einer Entwässerungseinrichtung die Flüssigkeit entzogen und dem Abwasser des Gichtgaswäschers des Hochofens zugeführt wird, so daß ein Feststoff entsteht, welcher der Mischtrommel der Möllerung und danach dem Sinterband und von dort dem Hochofen zugeführt wird.

2. Verfahren nach Anspruch 1, **dadurch gekennzeichnet, daß** das Abgas nach Verlassen des Sinterbands einem Elektrofilter oder einem Elektrofilter und einem in Reihe geschalteten Schlauchfilter zugeführt wird.

3. Verfahren nach einem der vorherigen Ansprüche, **dadurch gekennzeichnet, daß** die Wasser-Staub-Suspension Bandfilter entwässert wird.

4. Verfahren nach Anspruch 3, **dadurch gekennzeichnet, daß** der aus dem Vorlagesilo zugeführte und in dem Lösebehälter unter Zugabe von Wasser dispergierte Trockenstaub auf dem Bandfilter entwässert wird und mit dosierter Wasserzugabe nachgewaschen wird.

5. Verfahren nach Anspruch 4, **dadurch gekennzeichnet, daß** vor der Entwässerung in die Suspension ein Flockungsmittel dosiert zugegeben wird.

6. Verfahren nach Anspruch 4 oder 5, **dadurch gekennzeichnet, daß**: daß der Filterkuchen mit Wasser redispergiert wird und daß der chloridfreie Feststoff als Slurry in die Mischtrommel gefördert wird.

7. Anordnung zur Durchführung des Verfahrens nach einem der vorherigen Ansprüche mit einer zu einem Hochofen mit Gichtgaswäscher gehörigen Eisenerzsinteranlage mit einer Mischtrommel zur Möllervorbereitung und mit einem Sinterband, mit wenigstens einer nachgeschalteten Filtereinrichtung, durch weiche das Abgas zu einem Abgaskamin strömt, sowie mit einer dem Gichtgaswäscher zugeordneten Abwasseraufbereitungsanlage,**dadurch gekennzeichnet, daß** der Mischtrommel ein Vorlagesilo zugeordnet ist, welches aus der wenigstens einen Filtereinrichtung für das Abgas stammenden Trockenstaub aufnimmt, daß dem Vorlagesilo ein Lösebehälter zugeordnet ist, in welchem der Trockenstaub unter Zugabe von Wasser eine Suspension bildet, daß eine Entwässerungseinrichtung für die Suspension vorgesehen ist, weiche die Suspension in einen nahezu chloridfreien Feststoff und in eine chloridhaltige wässerig Lösung trennt, und daß die Anordnung Mittel zur Zuführung des nahezu chloridfreien Feststoffes zur Mischtrommel sowie Mittel zur Zuleitung des chloridhaltigen wässerig Lösung zum Abwasser des Gichtgaswäschers des Hochofens aufweist.

8. Anordnung nach Anspruch 7, **dadurch gekennzeichnet, daß** dem Lösebehälter ein Konditionierbehälter zur Zugabe von Flockungsmittel zugeordnet ist.

9. Anordnung nach Anspruch 7 oder 8, **dadurch gekennzeichnet, daß** der Entwässerungseinrichtung ein Rührbehälter zur Redispergierung des Filterkuchens nachgeordnet ist, um den Feststoff als Slurry in die Mischtrommel zu fördern.

## Claims

1. Method for treating chloride-containing waste gas from an iron ore sintering plant belonging to a blast furnace with a blast-furnace gas washer, comprising a mixing drum for preparing the charge and comprising a sintering belt, which waste gas, after leaving the sintering belt, flows through at least one filtering device in which dust entrained in the waste gas is separated, **characterised in that** the dry dust accumulated from the at least one filtering device is conveyed to a silo associated with the mixing drum, **in that** the dust in the silo is fed to a dissolving container and is dispersed therein with water, **in that** liquid is removed in a dewatering device from the water-dust suspension thus produced and is fed to the waste water of the blast-furnace gas washer of the blast-furnace, so a solid is produced which is supplied to the mixing drum for the charge and then to the sintering belt and from there to the blast furnace.

2. Method according to claim 1, **characterised in that** after leaving the sintering belt, the waste gas is fed to an electrostatic filter or to an electrostatic filter and a bag filter connected in series.

3. Method according to any of the preceding claims, **characterised in that** the water-dust suspension band filter is dewatered.

4. Method according to claim 3, **characterised in that** the dry dust supplied from the silo and dispersed with the addition of water in the dissolving container is dewatered on the band filter and post-washed with metered addition of water.

5. Method according to claim 4, **characterised in that** a flocculant is metered into the suspension prior to dewatering.

6. Method according to claim 4 or 5, **characterised in that** the filter cake is redispersed with water and **in that** the chloride-free solid is conveyed into the mixing drum as a slurry.

7. Arrangement for carrying out the method according to any of the preceding claims comprising an iron ore sintering plant belonging to a blast furnace with a blast-furnace gas washer and comprising a mixing drum for preparing the charge and comprising a sintering belt, with at least one filtering device connected downstream, through which the waste gas flows to a waste gas stack, and comprising a waste water treatment plant associated with the blast-furnace gas washer, **characterised in that** a silo is associated with the mixing drum and receives dry dust originating from the at least one filtering device for the waste gas, **in that** a dissolving container is associated with the silo in which, with the addition of water, the dry dust forms a suspension, **in that** a dewatering device is provided for the suspension and separates the suspension into a virtually chloride-free solid and a chloride-containing aqueous solution, and **in that** the arrangement comprises means for supplying the virtually chloride-free solid to the mixing drum and means for feeding the chloride-containing aqueous solution to the waste water of the blast-furnace washer of the blast-furnace.

8. Arrangement according to claim 7, **characterised in that** a conditioning container for adding flocculant is associated with the dissolving container.

9. Arrangement according to claim 7 or 8, **characterised in that** a mixing tank for redispersing the filter cake is connected downstream of the dewatering device to convey the solid into the mixing drum as a slurry.

## Revendications

1. Procédé de traitement du gaz brûlé chloré provenant d'une installation d'agglomération du minerai de fer faisant partie d'un haut-fourneau équipé d'un laveur de gaz de gueulard, comportant un tambour mélangeur pour la préparation du lit de fusion et comportant une bande d'agglomération, le gaz brûlé traversant après avoir quitté la bande d'agglomération au moins un dispositif de filtration, dans lequel la poussière entraînée par le gaz brûlé est séparée,
**caractérisé en ce que**
la poussière sèche produite à la sortie du au moins un dispositif de filtration est transportée vers un silo d'alimentation associé au tambour mélangeur, **en ce que**
la poussière se trouvant dans le silo d'alimentation est amenée à un réservoir de dissolution dans lequel elle est dispersée dans de l'eau ; **en ce que**
le liquide est extrait de la suspension eau-poussière ainsi produite dans un dispositif de séparation de l'eau, et amené aux eaux usées du laveur de gaz de gueulard du haut-fourneau, ce qui donne une matière solide, qui est amenée au tambour mélangeur de production du lit de fusion, puis à la bande d'agglomération, et de là au haut-fourneau.

2. Procédé selon la revendication 1, **caractérisé en ce que** le gaz brûlé est amené après avoir quitté la bande d'agglomération à un électrofiltre ou à un électrofiltre et à un filtre à manche monté en série.

3. Procédé selon l'une des revendications précédentes, **caractérisé en ce que** la suspension eau-poussière est asséchée sur un filtre à bande.

4. Procédé selon la revendication 3, **caractérisé en ce que** la poussière sèche amenée à partir du silo d'alimentation et dispersée dans le réservoir de dissolution par addition d'eau est asséchée sur le filtre à bande et relavée par addition dosée d'eau.

5. Procédé selon la revendication 4, **caractérisé en ce qu'**un floculant est ajouté à la suspension avant la séparation de l'eau.

6. Procédé selon l'une des revendications 4 ou 5, **caractérisé en ce que** le gâteau de filtration est redispersé avec de l'eau et **en ce que** la matière solide exempte de chlore est amenée sous la forme de boue dans le tambour mélangeur.

7. Dispositif pour la réalisation du procédé selon l'une de revendications précédentes, comprenant une installation d'agglomération du minerai de fer faisant partie d'un haut-fourneau équipé d'un laveur de gaz de gueulard, comportant un tambour mélangeur pour la préparation du lit de fusion et comportant une bande d'agglomération, comprenant au moins un dispositif de filtration monté en aval à travers lequel le gaz brûlé s'écoule vers une cheminée d'évacuation du gaz de gueulard, et comprenant une installation de traitement des eaux usées associée au laveur de gaz de gueulard, **caractérisé en ce qu'**au tambour mélangeur est associé un silo d'alimentation qui reçoit la poussière sèche provenant du au moins dispositif de filtration du gaz brûlé, **en ce qu'**au silo d'alimentation est associé un réservoir de dissolution, dans lequel la poussière sèche forme une suspension par l'addition d'eau, **en ce qu'**est prévu un dispositif de séparation de l'eau pour la suspension, qui sépare la suspension en une matière solide quasiment exempte de chlore et en une solution aqueuse contenant du chlore, et **en ce que** le dispositif comprend un moyen d'amenée de la matière solide quasiment exempte de chlore au tambour mélangeur et un moyen d'amenée de la solution aqueuse contenant du chlore aux eaux usées du laveur de gaz de gueulard du haut-fourneau.

8. Dispositif selon la revendication 7, **caractérisé en ce qu'**un réservoir de conditionnement est associé au réservoir de dissolution pour l'addition d'un floculant.

9. Dispositif selon l'une des revendications 7 ou 8, **caractérisé en ce qu'**un réservoir de brassage est disposé en aval du dispositif de séparation de l'eau pour la redispersion du gâteau de filtration, pour amener la matière solide au tambour mélangeur sous la forme de boue.
